# EUROPÄISCHE PATENTSCHRIFT

(11) **EP 3 217 188 B1**
(45) Veröffentlichungstag und Bekanntmachung des Hinweises auf die Patenterteilung: **26.06.2019**
(21) Anmeldenummer: 16000555.9
(22) Anmeldetag: 08.03.2016
(51) Int. Cl.: G01S 13/78, H01Q 3/24, H01Q 3/26, H01Q 21/20, H01Q 25/00

(54) **SEKUNDÄRRADAR MIT NEBENKEULENUNTERDRÜCKUNG SOWIE VERFAHREN ZUM BETRIEB EINES SOLCHEN**
SECONDARY RADAR WITH SIDE LOBE SUPPRESSION AND METHOD FOR OPERATING SAME
RADAR SECONDAIRE AVEC SUPPRESSION DES LOBES SECONDAIRES ET SON PROCÉDÉ DE FONCTIONNEMENT

(43) Veröffentlichungstag der Anmeldung: 13.09.2017
(73) Patentinhaber: HENSOLDT Sensors GmbH, 82024 Taufkirchen (DE)
(72) Erfinder: Hoffmann, Gebhard, 80805 München (DE)
(74) Vertreter: LifeTech IP Spies & Behrndt Patentanwälte PartG mbB

(56) Entgegenhaltungen:
- EP-A1- 2 911 240
- GB-A- 2 219 471
- GB-A- 2 289 799
- JP-A- 2011 176 512
- US-A- 4 451 831
- TRIM R M: "MODE S: AN INTRODUCTION AND OVERVIEW", ELECTRONICS AND COMMUNICATION ENGINEERING JOURNAL, INSTITUTION OF ELECTRICAL ENGINEERS, LONDON, GB, Bd. 2, Nr. 2, 1. April 1990 (1990-04-01), Seiten 53-59, XP000114489, ISSN: 0954-0695
- SATO M ET AL: "CYLINDRICAL ACTIVE PHASED ARRAY ANTENNA", IEICE TRANSACTIONS ON COMMUNICATIONS, COMMUNICATIONS SOCIETY, TOKYO, JP, Bd. E76-B, Nr. 10, 1. Oktober 1993 (1993-10-01), Seiten 1243-1247, XP000423572, ISSN: 0916-8516

## Beschreibung

Die Erfindung betrifft ein Sekundärradar mit Nebenkeulenunterdrückung zur Identifikation von eigenen und fremden Zielen, insbesondere zur Vermeidung einer Falschzieldarstellung sowie ein Verfahren zum Betrieb eines solchen Radars.

Sekundärradarsysteme sind in der Luftfahrtnavigation weit verbreitet, wobei diese für eine genaue Steuerung des Luftverkehrs genutzt werden. Dabei sind speziell Gebiete mit hoher Verkehrsdichte wie z.B. in der Nähe von Flughäfen auf diese Identifikationsmöglichkeit angewiesen.

Im Gegensatz zu Primärradaren, die mit den Reflexionen des Ziels arbeiten, versteht man unter einem Sekundärradar ein Radar das mit aktiven Zielen arbeitet und somit mit geringerer Leistung arbeiten kann. Dabei wird das Sekundärradar zur Identifizierung von Zielen eingesetzt und wird zumeist in Kombination mit einem Primärradar verwendet. Das Sekundärradar sendet ein Abfragesignal (in der Regel auf 1030 MHz) aus, das aktiv vom Transponder des Ziels mit einer Antwort (auf 1090 MHz) erwidert also beantwortet wird. Die Antwort kann eine charakteristische Modulation oder ein Datenpaket beinhalten, womit die Antwort abhängig vom verwendeten Einsatzbereich und Abfragemodus Zusatzinformationen wie Flughöhe oder Freund-Feind-Erkennung (IFF) beinhalten kann. Die Zusatzinformationen unterscheiden sich hinsichtlich Ihrer Verwendung, wobei hier vor allem zwischen dem militärischen und zivilen Betrieb unterschieden wird.

Problematisch bei Sekundärradaren ist der Umstand, dass Ziele, die sich im Nahbereich der Antenne befinden, nicht nur über die Hauptkeule der Richtantenne abgefragt werden, sondern auch über die Nebenkeulen abgefragt werden. Somit wird eine Transponderantwort von beiden Keulen des Abfragesignals veranlasst. Dies führt dazu, dass Ziele nicht mehr eindeutig angezeigt werden können, wobei unter derselben Entfernung unterschiedliche Ziele unter falschen Azimutwinkeln auftauchen können. Im schlimmsten Fall erscheint ein "ring around" d.h. ein voller Kreis auf dem Anzeigegerät, was überhaupt keine Identifikation des Zielobjekts zulässt.

Honold, Peter: Sekundär-Radar, Grundlagen und Gerätetechnik. Siemens Aktiengesellschaft, Berlin / München 1971 beschreibt die Grundlagen des Sekundärradars sowie die Problematik der Nebenkeulen. Eine Möglichkeit zur Nebenkeulenunterdrückung (Side Lobe Suppression SLS) ist die sogenannte Nebenkeulenunterdrückung auf dem Abfrageweg (Interrogation Path Side Lobe Suppression ISLS). Dabei wird eine zweite Antenne verwendet, wobei neben dem Abfragesignal einer Richtantenne ein Regelimpuls als Kontrollsignal über eine Rundstrahlantenne ausgesendet wird. Damit kann der Transponder über einen Pegelvergleich ermitteln, ob das Abfragesignal der Haupt- oder Nebenkeule zuzuordnen ist.

Eine spezielle Ausführung des ISLS-Verfahrens, welches von der Internationalen Luftfahrbehörde ICAO (International Civil Aviation Organization) vorgeschlagen wird ist beispielsweise das 3-Puls-Verfahren, bei dem die Pulse zeitlich nacheinander über die beiden Antennen abgestrahlt werden. Dabei werden zwei Abfrageimpulse P₁, P₃ ausgesendet, während ein eigener Regelimpuls P₂ (der zeitlich 2*µ*s nach dem ersten Abfrageimpuls P₁ liegt) über eine Antenne mit annähernder Rundstrahlcharakteristik ausgestrahlt wird. Dabei werden die Pulse P₁, P₂, P₃ vom gleichen Sender geliefert, wobei ein schneller HF-Leistungsumschalter verwendet wird.

Die Erkennung von Abfragen von Nebenkeulen erfolgt über einen Pegelvergleich, d.h. ein Amplitudenvergleich der Abfrageimpulse und des Bezugspulses (d.h. der Pegel des Kontrollsignals) im Transponder des Ziels, wobei sich Nebenkeulen dadurch auszeichnen, dass diese mit geringerer Leistung als der Regelimpuls empfangen werden. Es erfolgt also eine Prüfung, ob die Abfrage aus der Hauptkeule oder den Nebenkeulen herrührt. Somit wird eine Antwort nur bei Hauptkeulen-Abfragen ausgesendet.

Die verschiedenen Abfragestandards sind von der ICAO festgelegt, wobei hier vor allem der Standard Mark X (mit den relevanten Modes A/C sowie militärisch Mode1/2 und IFF Mode 5) sowie der Standard Mark XII (Mode S) zu nennen sind. Der Mode S (Mode Selektive) wurde als neuer Standard eingeführt, um dem immens angestiegenen Flugverkehr, der die Kapazitätsgrenze bestehender Modes bereits überschritten hatte, zu bewältigen. Zudem konnte mit der Einführung des Mode S der bis dato begrenzte Informationsumfang der Signale erweitert werden. Somit ist es möglich neben den All Interrogation (Abfrage aller im Bereich befindlicher Transponder) eine selektive Abfrage (auf Grund einer individuellen Identifikation) an Hand einzelner Kennungen durchzuführen, sowie zusätzliche Information mit dem Antwortsignal zu übermitteln. Dies ist besonders wichtig um die Menge von Transponderantworten auf das Mindestmaß zu reduzieren, wobei dies mit der impulskodierten Abfrage / Antwort ermöglicht wird.

Beim Mode S wird zusätzlich zum Impulsmodulationsverfahren für die selektive Abfrage auf der Senderseite eine DPSK (Differential Phase Shift Keying) Modulation, entsprechend 180° Phasensprünge, in einem längeren Datenimpuls P6benutzt. Die Nebenkeulenunterdrückung funktioniert bei Mode S derart, dass ein fester Phasensprung, der zur Synchronisation genutzt wird, durch einen von der Rundstrahlantenne (Kontrollsignal) ausgesendeten Impuls P5überdeckt wird, sofern sich der Transponder des Ziels außerhalb der Hauptkeule befindet. Nachdem hier eine Überdeckung von Impuls P5und P6genutzt wird, muss zwingend ein gleichzeitiges Aussenden auf der Richtantenne P1, P2, P6und der Rundstrahlantenne P5erfolgen. Somit erfordert die Verwendung des Mode S zwei getrennte Sendeverstärker im Vergleich zu den älteren Modi.

Eingesetzt wird das Sekundärradar hauptsächlich zur Luftraumüberwachung, z.B. im Bereich von Flugplätzen, Kontrollstellen der Flugsicherung etc. Um ein Beispiel zu beschreiben, das für die Flugsicherung konzipiert ist, wäre das ASR-NG®-Next Generation Airport Surveillance Radar, der Firma Airbus Defence and Space GmbH, Ottobrunn, Deutschland zu nennen. Kennzeichen dieser Überwachungsradare ist die Notwendigkeit einer Drehvorrichtung zur Abdeckung des gesamten Azimuts von 0-360°, wobei das Sekundärradar wiederum aus zwei separaten Antennen (Richt- und Kontrollantenne), um eine Nebenkeulenunterdrückung auf dem Abfrageweg zu erreichen, besteht. Die Speisung der beiden Antennen erfolgt auf Grund der Mode S Fähigkeit von zwei dedizierten Sendern.

Nachteile bei dieser Form des Sekundärradars sind die Notwendigkeit einer drehbaren Vorrichtung zur Abdeckung des gesamten Azimuts sowie die Verwendung einer zusätzlichen Antenne zur Nebenkeulenunterdrückung, was den Gesamtaufwand und die Baugröße der Antenne vergrößert.

JP2011-176512 offenbart eine weitere bekannte zylindrische aktive phasengesteuerten Gruppenantennenvorrichtung, die in der Lage ist, eine Nebenkeule in einem sekundären Überwachungsradar wirksam zu unterdrücken. EP 29112401 offenbart ein weiteres bekanntes Abfragesystem für die Identifizierung Freund/Feind unter Nutzung einer halbzylindrisch angeordneten Antennenelemente, um einen festen Winkelbereich abzudecken.

Es ist Aufgabe der Erfindung ein kostengünstiges und kompaktes Sekundärradar mit Nebenkeulenunterdrückung zu schaffen.

Diese Aufgabe wird mit dem Sekundärradar gemäß Patentanspruch 1 gelöst. Vorteilhafte Ausführungen der Erfindung sowie ein Verfahren zum Betrieb eines solchen Radars sind Gegenstand von weiteren Ansprüchen.

Das Sekundärradar mit Nebenkeulenunterdrückung zur Vermeidung einer Falschzieldarstellung umfasst erfindungsgemäß:
Eine erste Gruppe von Strahlerelementen, deren Überlagerung eine elektronisch schwenkbare Richtcharakteristik (im Sinne der elektronischen Strahlformung) zur Aussendung eines Abfragesignals erzeugt. Eine zweite Gruppe von Strahlerelementen, deren Überlagerung ein Kontroll-Signal (z.B. ein Regelimpuls wie in der Beschreibungseinleitung beschrieben) zur Nebenkeulenunterdrückung erzeugt.

Dabei sind die Strahlerelemente der ersten und zweiten Gruppe die Strahlerelemente derselben Phased-Array-Antenne und die Zuordnung der einzelnen Strahlerelemente zu der ersten oder zweiten Gruppe von Strahlerelementen kann mittels einer Steuereinrichtung fortlaufend verändert werden und ist abhängig von der momentanen Blickrichtung des Sekundärradars, in welche das Abfragesignal ausgesandt werden soll.

In anderen Worten erfährt ein Strahlerelement abhängig von der Zeit mittels einer Steuereinrichtung die individuelle funktionale Zuordnung und somit die entsprechende Signalspeisung und strahlt entweder ein Signal zur Bildung des gerichteten Abfragesignals (mit entsprechender zeitabhängiger Ausrichtung) oder ein Signal zur Bildung des möglichst omnidirektionalen Kontrollsignals ab, wobei die Zuordnung von der momentanen Blickrichtung des Sekundärradars abhängt. Es erfolgt zeitabhängig ein Wechsel in der Signalversorgung für jedes Strahlerelement, um die aktuell benötigte Signalart jedes Strahlerelements einspeisen zu können.

In einer vorteilhaften Ausführung ist das Sekundärradar zum Betrieb in zumindest einem der Abfragemodi Mark X oder Mark XII eingerichtet. In einer weiteren besonderen Ausführung kann der Betrieb im Mode S erfolgen. Besonders vorteilhaft ist das Sekundärradar eingerichtet, dass das Abfrage- und Kontrollsignal gleichzeitig abstrahlbar sind. Dadurch ist es möglich eine Nebenkeulenunterdrückung zur Vermeidung von Transponder-Antworten beim Betrieb im Mode S zu erreichen.

In einer vorteilhaften Ausführung des Sekundärradars sind die Strahlerelemente auf der Antenne derart angeordnet, dass beliebige Azimutwinkel im Bereich von 0° bis 360° abgedeckt werden können.

Die Abdeckung des gesamten Bereichs entspricht einer 360° Antenne. Vorteilhaft erfolgt die Anordnung der Strahlerelemente kreisförmig oder in vergleichbaren Anordnungen, z.B. auf Ovalen, Polygonen, etc. Damit wird die Verwendung eines drehbaren Gestells oder Antennenaufbaus vermieden, womit sich eine Vereinfachung des Antennenaufbaus ergibt, der keine mechanisch drehbaren Teile aufweist und eine Verringerung des Wartungsaufwand bewirkt.

In einer speziellen Ausführung kann eine Teilabdeckung des Azimutbereichs vorliegen, wobei diese durch entsprechende Anordnung der Strahlerelemente erreicht wird. Alternativ kann eine solche Teilabdeckung auch durch eine elektronische Ausblendung eines Azimutbereichs erreicht werden (bspw. von der möglichen Abdeckung von 0° - 360° wird nur ein Bereich von 0° - 270° im Rahmen der Strahlschwenkung überwacht).

Somit kann im Rahmen der elektronischen Strahlschwenkung der gesamte Azimut abgedeckt werden, wobei anders als bei einem Sekundärradar, das auf einer mechanischen Rotation der Antenne beruht, vorteilhaft auch ein beliebiger Wechsel / Sprung zwischen verschiedenen Azimutwinkeln erfolgen kann.

In einer vorteilhaften Version der Erfindung ist die Phased Array Antenne als eine aktive Phased Array Antenne ausgeführt (auch unter dem Namen Active Electronically Scanned Array AESA-Antenne bekannt), wobei vorteilhaft die Strahlerelemente als Transmit-Receive Modulen (TRM) ausgeführt sind und somit einzeln in Phase und Amplitude angesteuert werden können.

Dabei ist es insbesondere möglich, die Sekundärradarantenne aus identischen TRM / Strahlerelementen aufzubauen. Dies vereinfacht den bisherigen Aufbau, der durch die Verwendung getrennter Antennen und unterschiedlicher Strahlerelemente gekennzeichnet war. Somit wird durch die erfindungsgemäße Verwendung einer Phased Array Antenne ein kompaktes Design / Bauform erreicht, das durch die Reduktion / Entfall der separaten Kontrollantenne erreicht wird. Zudem wird die Verfügbarkeit des Sekundärradars durch Verwendung der Phased Array Antenne erhöht und durch die Vermeidung einer mechanischen Antennendrehung der Wartungsaufwand erheblich verringert bzw. vereinfacht.

Im Weiteren wird neben dem Sekundärradar auch das Verfahren zum Betrieb eines solchen Sekundärradars mit Nebenkeulenunterdrückung beansprucht, wobei durch die Überlagerung einer ersten Gruppe von Strahlerelementen eine elektronisch schwenkbare Richtcharakteristik zur Aussendung eines Abfragesignals erzeugt wird, und durch die Überlagerung einer zweiten Gruppe von Strahlerelementen ein Kontroll-Signal zur Nebenkeulenunterdrückung erzeugt wird. Erfindungsgemäß werden die Strahlerelemente der ersten und zweiten Gruppe in einer gemeinsamen Phased Array Antenne bereitgestellt, und die Zuordnung der einzelnen Strahlerelemente zu der ersten und zweiten Gruppe wird fortlaufend verändert und ist abhängig von der momentanen Blickrichtung des Sekundärradars, in welche das Abfragesignal ausgesandt wird.

In einer vorteilhaften Variante wird ein Betrieb in zumindest einem der Abfragemodi Mark X oder Mark XII ausgeführt. In einer weiteren vorteilhaften Ausführung des Verfahrens wird das Radar im Mode S betrieben.

Vorteilhaft werden das Abfragesignal und Kontrollsignal gleichzeitig abgestrahlt.

Die Erfindung wird anhand eines konkreten Ausführungsbeispiels unter Bezugnahme auf Fig. 1 bis 5 näher erläutert:
Es zeigen:
- Fig. 1: eine Prinzipskizze zum Aufbau des erfindungsgemäßen Sekundärradars;
- Fig. 2: eine Ausführung der Antenne des erfindungsgemäßen Sekundärradars mit einem Beispiel der Gruppierung der einzelnen Strahlerelemente bei vorgegebener Abstrahlrichtung (Azimutwinkel α) des Abfragesignals;
- Fig. 3: einen Ausschnitt der Antenne nach Fig. 2 mit der Zuordnung zur ersten Gruppe bei gegebener Abstrahlrichtung;
- Fig. 4: eine Darstellung der Richtcharakteristiken der ersten und zweiten Gruppe von Strahlerelementen einer Antenne des erfindungsgemäßen Sekundärradars;
- Fig. 5: ein erfindungsgemäßes Sekundärradar mit der Ausführung der Antenne aus Fig. 4 beim Einsatz zur Luftraumabtastung, dargestellt zu zwei unterschiedlichen Zeitpunkten.

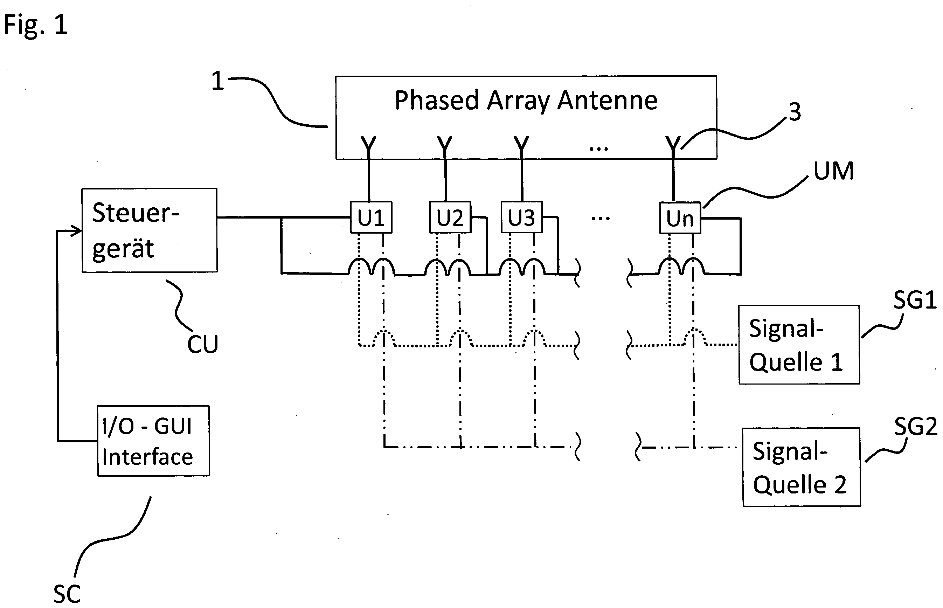

Fig. 1 zeigt eine schematische Darstellung eines erfindungsgemäßen Sekundärradars mit Nebenkeulenunterdrückung. Dabei erkennt man die Phased Array Antenne 1 mit einer Vielzahl von Strahlerelementen 3 von S = 1, 2, 3...n, einer Steuereinrichtung/- gerät CU und zwei Signalquellen SG1, SG2. Für die gleichzeitige Erzeugung von Abfragesignal und Kontrollsignal sind die Strahlerelemente 3 in zwei Gruppen eingeteilt (in dieser Prinzipdarstellung nicht dargestellt). Im gezeigten Beispiel wird die Erzeugung der beiden für die Erzeugung von Abfragesignal und Kontrollsignal benötigten Signalarten durch zwei verschiedene Signalquellen SG1, SG2 bewirkt. Dabei ist für jede Gruppe der Strahlerelemente 3 jeweils eine gemeinsame, zentrale Signalquelle SG1, SG2 zur Speisung vorgesehen. In einer anderen, nicht gezeigten, dezentralen Ausführungen sind für jedes der Strahlerelemente 3 jeweils zwei Signalquellen vorhanden. Sowohl bei der zentralen wie der dezentralen Ausführung wird beim Betrieb des Radars fortlaufend und in Abhängigkeit von der zu realisierenden Abstrahlrichtung des Abfragesignals zwischen den beiden, einem Strahlerelement 3 zugeordneten Signalquellen SG1, SG2 umgeschaltet, wobei vorteilhaft die entsprechende Umschaltung von der Steuereinrichtung CU bewirkt wird. In der Ausführung der Fig. 1 sind separate Umschalter UM auf Grund einer zentralen Signalversorgung vorgesehen. Wobei die veränderliche Zuordnung der Signale in anderen dem Fachmann bekannten Ausführungen erfolgen kann z.B. durch Integration in andere Bauteile (Steuergerät, TRM Module) oder Schaltungsanordnungen im Sinne der Erfindung.

In einer anderen, nicht gezeigten, dezentralen Ausführung ist es auch möglich, mit einer einzigen Signalquelle pro Strahlerelement 3 auszukommen, soweit diese z.B. mit Hilfe eines zusätzlichen Modulators in der Lage ist, beide Signalarten zu erzeugen. In einer solchen Ausführung muss also ein Umschalten zwischen der Erzeugung des Abfragesignals und des Kontrollsignals beim Betrieb der einzelnen Signalquelle veranlasst werden. Für eine dezentrale Ausführung eignet sich besonders die Ausführung als AESA-Antenne.

Die Umschalter UM können im Sinne eines einzelnen Schalters / Weiche oder in einer Umschalter-Schaltungsanordnung/-block zur Verbindung mit einem Signalpfad mechanisch, elektronisch oder in einer anderen dem Fachmann bekannten Art ausgeführt sein, die eine veränderliche Speisung der Strahlerelemente 3 durch die Zuordnung der Strahlerelemente 3 zu einer der beiden Gruppen 10, 20 durch die Steuereinrichtung CU ermöglicht.

Dabei enthält das erfindungsgemäße Sekundärradargerät alle weiteren, dem Fachmann bekannten, elektronischen / mechanischen Bauteile, die für den Betrieb, die Signalerzeugung und für die elektronische Strahlformung notwendig sind. Dies sind z.B. Phasenschieber, A/D Wandler, Empfänger, Prozessoren etc. In der Ausführung gemäß Fig. 1 ist zusätzlich ein Eingabe/Ausgabe Gerät SC vorhanden, das wiederum ein entsprechendes graphisches Userinterface und Eingabemitteln z.B. Tastatur / Maus etc. aufweist, vorhanden.

Im Weiteren wird die Erfindung exemplarisch anhand einer kreisförmigen Anordnung der Strahlerelemente 3 erläutert, wobei jede andere Anordnung der Strahlerelemente 3 verwendet werden kann (andere mögliche Alternativen sind ohne Beschränkung auf die genannten: Anordnungen auf Ovalen, Polygonen, gebogene Arrays oder Anordnungen mehrerer Sub-Arrays nebeneinander). Im Beispiel wird eine elektronische Abdeckung des Azimuts im Bereich von 0° - 360° erläutert, wobei sich die Erfindung nicht auf eine Abdeckung des gesamten Azimuts beschränkt (d.h. auch Teilabdeckungen können damit realisiert werden).

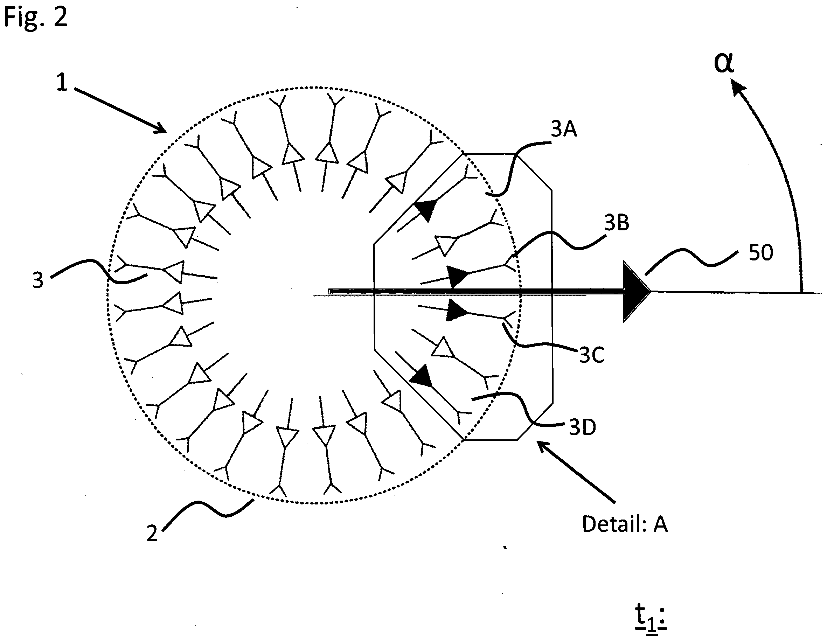

Fig. 2 zeigt dazu den bespielhaften Aufbau einer Phased Array Antenne 1 eines erfindungsgemäßen Sekundärradars, das aus 24 kreisförmig angeordneten einzelnen Strahlerelementen 3 aufgebaut ist, wobei die Strahlerelemente 3 auf einer Antennenträgerstruktur in Form der Kreisscheibe 2 platziert sind. In anderen, hier nicht gezeigten Ausführung, werden mindestens 50 Strahlerelemente, z.B. eine Ausführung mit 60 Strahlerelementen, eingesetzt.

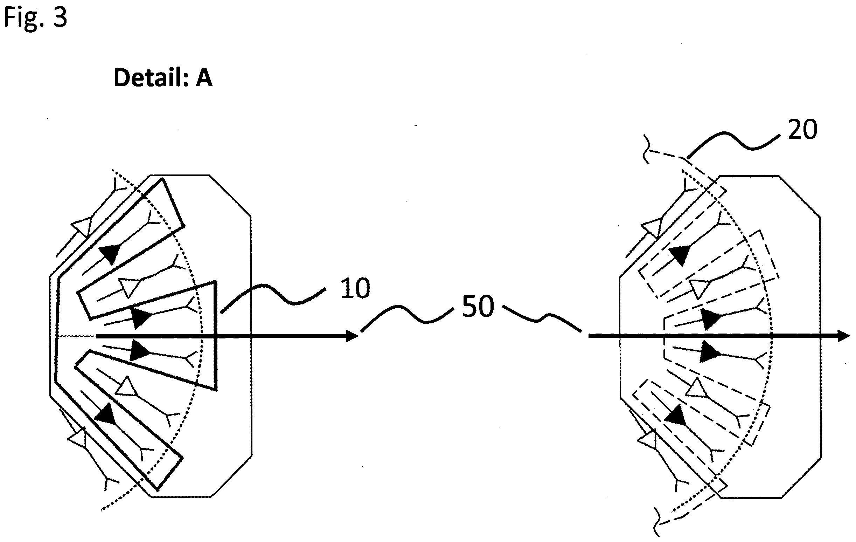

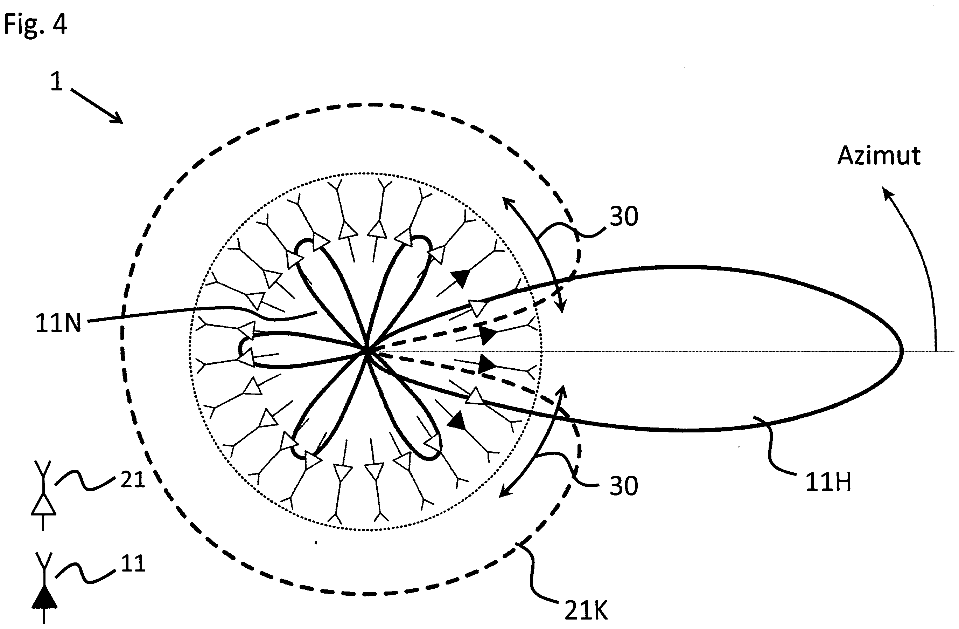

Das Grundprinzip zur Bildung des Abfragesignals wird in Fig. 2, 3 an der Abstrahlrichtung 50 zu einem Zeitpunkt t dargestellt, wobei eine Strahlschwenkung in diese Richtung durch die Zuordnung mittels der Steuereinrichtung CU (Fig. 1) der Strahlerelemente 3A, 3B, 3C, 3D zur ersten Gruppe 10 (Fig. 3) erfolgt. Im Sinne der Erfindung gehören diejenigen Strahlerelemente 3 zu der ersten Gruppe 10, deren Summensignal die gerichtete Abstrahlung des Abfragesignals erzeugt (die Gesamtheit der Strahlerelemente der ersten Gruppe 10 wird im Folgenden auch als Richtantenne bezeichnet). Das zugehörige Antennendiagramm des Summensignals mit Hauptkeule 11H ist in Fig. 4 an einem Beispiel dargestellt. Für die Erzeugung des Abfragesignals / Summensignals werden nur diejenigen Strahlerelemente 3 der Antenne benötigt, die in einem gewissen Winkelbereich benachbart zur Hauptkeule 11H liegen, wie aus der Fig. 3, 4 ersichtlich ist.

Die zweite Gruppe der Strahlerelemente 20, deren Überlagerung ein Rundstrahldiagramm zur Aussendung eines Kontroll-Signals zur Nebenkeulenunterdrückung erzeugt, wird durch die von der ersten Gruppe 10 nicht verwendeten Strahlerelemente 3 (d.h. aus den restlichen Strahlerelementen 3) der Phased Array Antenne 1 gebildet. Das Summensignal der zweiten Gruppe ergibt, annähernd über den gesamten Winkelbereich von 0 bis 360 Grad, eine omnidirektionale Abstrahlung (entsprechendes Antennendiagramm siehe Fig. 4).

Im Betrieb des Sekundärradars wird die Zuordnung der einzelnen Strahlerelemente 3 zu der ersten oder zweiten Gruppe 10, 20 von Strahlerelementen fortlaufend verändert und ist abhängig von der momentanen Blickrichtung 50 des Sekundärradars, d.h. in welche das Abfragesignal ausgesandt werden soll. Die Zuordnung der Strahlerelemente 3 zu der Funktion, ein Abfragesignal oder ein Kontrollsignal zu erzeugen, erfolgt dabei über die Steuereinrichtung CU.

In einer besonders vorteilhaften Ausführung ist die Antenne als Active Electronically Scanned Array (AESA-Antenne) ausgeführt. Dazu kann in einer vorteilhaften Ausführung eine einzige Signalquelle pro Strahlerelement 3 zur Erzeugung von Kontroll- und Abfragesignal vorhanden sein. Eine solche Signalquelle ist, beispielsweise mit Hilfe eines zusätzlichen Modulators, in der Lage, beide Signalarten zu erzeugen.

In Fig. 4 werden die Richtcharakteristiken der Richtantenne (erste Gruppe 10) und Kontrollantenne (zweite Gruppe 20) bei gleichzeitigem Aussenden der Signale, beispielsweise beim Betrieb im Mode S, dargestellt. Die Strahlerelemente 11 der ersten Gruppe 10 sind weiß dargestellt, die Strahlerelemente 21 der zweiten Gruppe 20 schwarz. Man erkennt die Hauptkeule 11H und die (unerwünschten) Nebenkeulen 11N des Abfragesignals als Überlagerung der Strahlerelemente 11 sowie das (mit Ausnahme des Bereichs der Hauptkeule 11H des Abfragesignals) omnidirektionale Diagramm 21K des Kontrollsignals, das sich aus den Strahlerelementen 21 der zweiten Gruppe 20 bildet. Die beiden Gruppen 10,20 von Strahlerelementen 11, 21 sind Teile derselben Phased Array Antenne 1, bei der die Zuordnung der Strahlerelemente 11, 21 zu der ersten und zweiten Gruppe 10, 20 veränderlich erfolgt. Man erkennt im Beispiel, dass der Großteil aller Strahlerelemente (Strahlerelemente 21) die zweite Gruppe 20 und ein kleiner Teil aller Strahlerelemente (Strahlerelemente 11) die erste Gruppe 10 bildet.

Die dynamische bzw. fortlaufende Zuordnung der Strahlerelemente 11, 21 zur ersten oder zweiten Gruppe 10, 20 ist abhängig von der momentanen Blickrichtung 50 des Sekundärradars. Im Ergebnis kann eine Drehung der Abstrahlrichtung zum Zwecke der Abdeckung des gesamten Azimuts analog einer mechanischen Rotation einer bekannten Antenne oder die gezielte Einstellung unterschiedlicher Azimutwinkel erreicht werden. Die mechanische Drehung der Richtantenne wird erfindungsgemäß durch eine elektronische Strahlschwenkung in Verbindung mit der speziellen Anordnung und Zuordnung der Strahlerelemente 11, 21 ersetzt, wobei durch die Kombination mit der Kontrollantenne in einer gemeinsamen Phased Array Antenne 1 eine erheblich kompaktere und besser verfügbare Antenne gebildet wird.

Auf Grund der gemeinsamen und bevorzugt gleichzeitigen Nutzung einer einzigen (Phased Array) Antenne 1 sind die Antennendiagramme in Bezug auf die Erzeugung von Abfrage- und Kontrollsignal in besonderer Weise ausgeprägt. Bisherige separate Antennen weisen eine Überlappung der beiden Diagramme für Abfrage- sowie Kontrollsignal auf. Durch die erfindungsgemäße Aufteilung der Strahlerelemente 3 der Phased Array Antenne 1 auf die erste und zweite Gruppe 10, 20 kann die Abstrahlung des Kontrollsignals nicht mehr komplett omnidirektional erfolgen.

Wie man aus den Strahlungsdiagrammen für die Erzeugung von Abfragesignal und Kontrollsignal in Fig. 4 erkennt, kann mit entsprechend gewählter Zuordnung der Strahlerelemente 11, 21 zu den beiden Gruppen eine vollständige Abdeckung der Winkelbereiche außerhalb der Hauptkeule 11H des Abfragesignals erreicht werden. Dies erfolgt in der in der Fig. 4 gezeigten Ausführung dadurch, dass in einem ersten Azimutbereich ausschließlich Strahlerelemente 3 einer Gruppe vorhanden sind, und in einem zweiten Azimutbereich ausschließlich Strahlerelemente 3 der anderen Gruppe vorhanden sind, und in den Azimutbereichen zwischen erstem und zweitem Azimutbereich Übergangsbereiche 30 gebildet sind, in denen abwechselnd Strahlerelemente 3 beider Gruppen vorhanden sind.

Die Übergangsbereiche 30 befinden sich am Rand der beiden Seiten der Hauptkeule 11H und ragen in den Bereich des unvollständigen Kreis des Kontrollantennendiagramms 21K hinein. Es ergibt sich eine leichte Überlappung der Diagramme von Richt- bzw. Kontrollantenne. Die konkrete Auslegung des Übergangsbereichs 30 mit der alternierenden Strahlerzuordnung zur ersten bzw. zweiten Gruppe 10, 20 ist abhängig von der Arrayarchitektur (Anordnung, Position und Anzahl der Strahlerelemente 3 sowie der resultierenden Hauptkeule 11H).

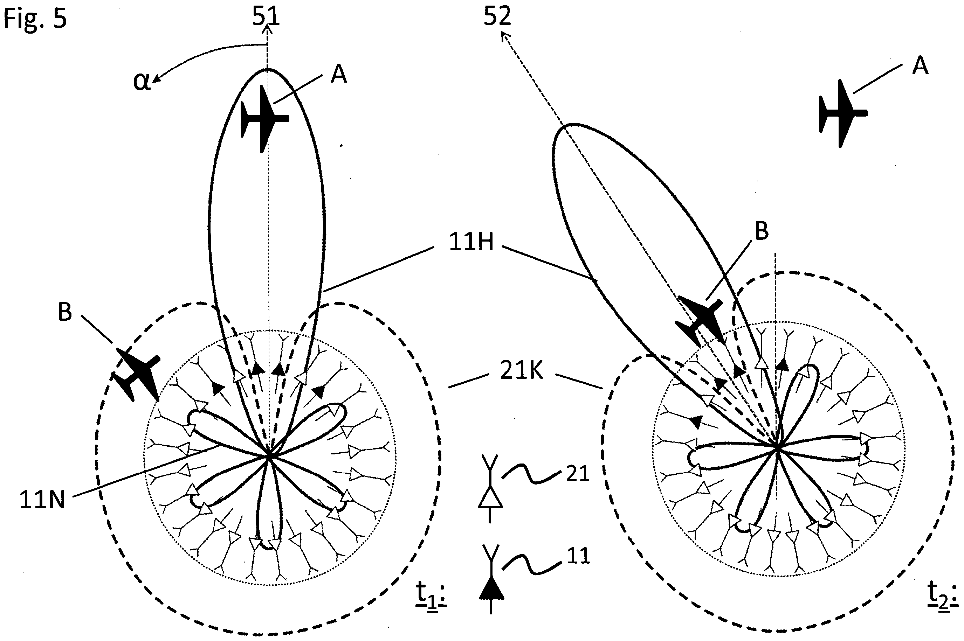

Durch die Einführung der Übergangsbereiche wird erreicht, dass die Antennendiagramme von Kontrollsignal und Abfragesignal sich möglichst lückenlos ergänzen, ohne dass dadurch die Richtcharakteristik des Abfragesignals wesentlich beeinträchtigt wird. Die Antennendiagramme sind annähernd komplementär, d.h. das Kontroll-signal kann alle Richtungen abdecken, die außerhalb oder am äußersten Rand der Hauptkeule 11H des Abfragesignals sind. Somit ist die Nebenkeulenunterdrückung ohne Einschränkung gewährleistet, so dass auch am Rand der Hauptkeule 11H befindliche Ziele eine Transponderantwort auf Grund des Empfangs aus den Nebenkeulen 11N vermeiden. Dies wird unten im Zusammenhang mit Fig. 5 näher erläutert.

Die Mischung der Strahlerelemente 11, 21 im Übergangsbereich kann in der Form ausgeführt werden, dass einer Verzahnung bei der Zuordnung der Strahlerelemente 11, 21 zu der ersten oder zweiten Gruppe 10, 20 vorliegt. Beispielsweise können sich Strahlerelemente 11, 21 der ersten und zweiten Gruppe 10, 20 abwechseln, d.h. die Zuordnung zur Richt- und Kontrollantenne wechselt vorteilhaft mit jedem Strahlerelement 11, 21 (bspw. folgt auf ein Strahlerelement der ersten Gruppe ein Strahlerelement der zweiten Gruppe 21 wie in Fig. 4 dargestellt), wobei aber auch unterschiedliche reguläre oder irreguläre Alternierungsmuster verwendet werden können.

Dabei sind mögliche Anordnungen der Strahlerelemente 3 auf den Seiten oder Ecken eines aus einem Polygon gebildeten Prismas bzw. auf der Mantelfläche eines Zylinders / auf dem Rand einer kreisförmigen Platte 2 wie in den Fig. 2-4, wobei sich eine Zylinderanordnung in besonderem Maße für die Verwendung auf einem Schiffsmast eignet. Im Sinne der Erfindung sind auch andere dem Fachmann bekannte Ausführungen oder Abwandlungen der Antenne zu verstehen.

In besonderer Weise eignet sich als Ausführungsform die Verwendung einer Active Phased Array Antenne (AESA), wobei sich die AESA Antenne dadurch kennzeichnet, dass (vorteilhaft: identische) Transmit/Receive Module (TRM) verwendet werden die vorteilhaft jeweils eine integrierte und umschaltbare HF-Quelle (d.h. eine dezentrale Versorgung jedes einzelnen Strahlerelements 3) aufweisen, womit sich der Aufbau der Antenne wesentlich vereinfacht.

In Fig. 5 wird das erfindungsgemäße Sekundärradar mit Nebenkeulenunterdrückung an einer bespielhaften Verwendung der Luftraumüberwachung, wobei die veränderliche Zuordnung der Strahlerelemente 11, 21 einer Phased Array Antenne 1 bei Änderung der Abtastrichtung an einem konkreten Fall beschrieben wird. Exemplarisch werden dabei die zwei Zeitpunkte t₁ (links) und t₂ (rechts) mit den Abstrahlrichtungen 51, 52 betrachtet, wobei hier von einer Azimutdrehung entgegen des Uhrzeigersinns ausgegangen wird.

Die Aussendung des Abfragesignals erfolgt unter einem Azimutwinkel, wobei dieser durch Blickrichtung des Pfeil definiert wird. Dabei bilden die Strahlerelemente 11 die erste Gruppe 10, wobei die erste Gruppe 10 zur Aussendung des Abfragesignals dient. Die Aussendung des Abfragesignals führt zu der Hauptkeule 11H in Blickrichtung und außerhalb der Blickrichtung zu den Nebenkeulen 11N.

Die Nebenkeulen 11N des Abfragesignals in Fig. 5 würden ohne Anwendung der Erfindung dazu führen, dass zum Zeitpunkt t₁ nicht nur das Luftfahrzeug (Ziel) A, das sich in der Hauptkeule 11H befindet, auf das Abfragesignal antwortet, sondern auch Luftfahrzeug B im Bereich des Nebenkeulenempfangs. Auf Grund der Nebenkeulen 11N können somit Mehrdeutigkeiten auftreten, die die eingangs beschriebenen Effekte einer Falschzieldarstellung oder "ring around" verursachen können.

Die Unterdrückung des beschriebenen unerwünschten Effekts der Nebenkeulen 11N, wird erfindungsgemäß mit der zweiten Gruppe 20 von Strahlerelementen der gemeinsamen Phased Array Antenne 1 realisiert, die das Kontrollantennendiagramm 21K bildet. Dabei erfolgt vorteilhaft ein Betrieb in zumindest einem der beiden Abfragemodi Mark X oder Mark XII. In einer besonderen Ausführung der Erfindung kann dabei das Sekundärradar im Mode S betrieben werden. Vorteilhaft kann dabei eine gleichzeitige Aussendung des Abfrage und Kontrollsignals erfolgen.

Das ausgesandte Kontrollsignal ermöglicht dem Transponder des Ziels B zu prüfen, ob das empfangene Abfragesignal aus der Hauptkeule 11H / Hauptempfangsrichtung empfangen wird oder wie im gezeigten Beispiel zum Zeitpunkt t₁ zu einer Nebenkeule 11N / Nebenkeulenrichtung gehört.

Die Zuordnung zu einer ersten Gruppe 10 von Strahlerelemente 11 und einer zweiten Gruppe 20 von Strahlerelementen 21 ist mittels der Steuereinrichtung CU fortlaufend veränderbar und diese ist abhängig von der aktuellen Blickrichtung des Sekundärradars ist, in welche das Abfragesignal ausgesendet wird.

Die Bildung des Abfragesignals zum Zeitpunkt t₂ erfolgt, nach einer Änderung der vorgegebenen Blickrichtung in die Abstrahlrichtung 52 (entsprechend einer Winkeländerung a), mit der ersten Strahlergruppe 10, wobei sich die Zusammensetzung / Zuordnung (mittels der Steuereinrichtung CU) der ersten Strahlergruppe 10 zum Zeitpunkt t₂ wie in Fig. 5 zu erkennen ist, verändert hat. Dabei erkennt man, dass die Strahlerzuordnung sich um zwei Felder entgegen des Uhrzeigersinns verändert hat, am Beispiel ist der zum Zeitpunkt t₁ rechte der beiden mittleren Strahler 11 der Hauptkeule 11H in Blickrichtung 50 nun zum Zeitpunkt t₂ derart zugeordnet, dass dieser nun den Rand für die erste Gruppe 10 bildet. Bei einer Fortsetzung der Drehung zum Zeitpunkt t₂₊ₓ würde dieser Strahler eine Zuordnung zur zweiten Gruppe 20 erfahren, somit würde dieser Strahler dann statt dem Abfragesignal nun das Kontrollsignal aussenden.

Im Fall von beliebigen Winkeln bzw. bei Winkelsprüngen bei einer Änderung der Abstrahlrichtung, wie es mit der Erfindung möglich ist, würden sich komplett neue Zuordnungen ergeben. D.h. Teile oder alle Strahlerelemente 11 der ersten Gruppe 10 würden somit zu Strahlerelementen 21 der zweiten Gruppe 20 werden, und Teile der zweiten Gruppe 20 würden die Funktion der Strahlerelemente 11 der ersten Gruppe 10 übernehmen. Die jeweilige Zuordnung der Strahlerelemente 11 für die vorgegebene Abfragerichtung erfolgt in einer für den Fachmann sinnvollen Ausgestaltung (hinsichtlich Auswahl / Anzahl). Dabei kann z.B. auf gespeicherte Look-Up-Tabellen zurückgegriffen werden.

Zum Zeitpunkt t₂ befindet sich das Ziel B in der Hauptkeule des Abfragesignals und wird eindeutig detektiert. Dagegen wird das Ziel A, welches sich außerhalb der Hauptkeule befindet, als Scheinziel erkannt und unterdrückt.

Beim Einsatz der erfindungsgemäßen Antenne wird vom Fachmann basierend auf der verwendeten Array-Architektur und Strahlereigenschaften festgelegt, wie viele und welche Strahlerelemente 3, 11 bei der im Beispiel gewählten kreisförmigen Ausführung zur Strahlformung verwendet werden, d.h. es wird am Anfang einmalig über das Eingabegerät SC Steuereinheit / Computer definiert bzw. einprogrammiert, wobei auch dynamische Anwendungen möglich sind. Somit erfolgt eine (feste oder dynamische) Definition der Anzahl und Auswahl der Strahlerelemente 3 der ersten und zweiten Gruppe 10, 20. Eine dynamische Ausführung kann sich auf Grund der speziellen Architektur der Anordnung bspw. auf einem Oval oder durch unterschiedliche Genauigkeitsanforderungen ergeben.

Durch den vorteilhaften Einsatz von einem einzigen Strahler-Typ sowie der Verwendung einer einzigen gemeinsamen Antenne und Vermeidung einer mechanischen Dreheinheit lassen sich erhebliche Kosteneinsparungen erzielen und zudem kann eine deutliche Verkleinerung der Antennenbauform erreicht werden. Zudem ermöglicht die erfindungsgemäße Anwendung der elektronischen Strahlschwenkung beliebige Sprünge und Wechsel zwischen Azimutwinkeln beispielsweise von 30° auf 120°, dann auf 345° und zurück auf 50° bei uneingeschränkter Fähigkeit des Radars zur Nebenkeulenunterdrückung. Es besteht zudem keine Notwendigkeit, eine ganze Kreisbewegung / Rotation der Antenne wie bei bisherigen Systemen durchzuführen.

### Bezugszeichenliste

- 1: Phased Array Antenne
- 2: Antennenträgerstruktur
- 3, 3A-D: Strahlerelement(e)
- 10: erste Gruppe von Strahlerelementen
- 20: zweite Gruppe von Strahlerelementen
- 11: Strahlerelemente der ersten Gruppe
- 21: Strahlerelemente der zweiten Gruppe
- 11H: Hauptkeule der Richtantenne
- 11N: Nebenkeulen der Richtantenne
- 21K: unvollständiger Kreis des Kontrollantennendiagramms
- 30: Übergangsbereiche (Strahlerzuordnung)
- 50, 51, 52: Abstrahlrichtung in Azimut
- A, B: Ziele (hier Luftfahrzeuge)
- CU: Steuereinrichtung
- SC: Eingabe-/Ausgabegerät mit Graphical User Interface
- SG1, SG2: Signalgenerator / Signalquelle 1, 2
- t₁, t₂: Zeitpunkte
- UM: Umschalter (Weiche)
- α: Azimutwinkel

## Patentansprüche

1. Sekundärradar mit Nebenkeulenunterdrückung zur Vermeidung einer Falschzieldarstellung, umfassend
- eine erste Gruppe von Strahlerelementen (10), deren Überlagerung eine elektronisch schwenkbare Richtcharakteristik zur Aussendung eines Abfragesignals erzeugt,
- eine zweite Gruppe von Strahlerelementen (20), deren Überlagerung ein Kontroll-Signal zur Nebenkeulenunterdrückung erzeugt,
**dadurch gekennzeichnet, dass** die Strahlerelemente (3, 11, 21) der ersten und zweiten Gruppe die Strahlerelemente einer gemeinsamen Phased-Array Antenne (1) sind, und die Zuordnung der einzelnen Strahlerelemente (3, 11, 21) zu der ersten oder zweiten Gruppe von Strahlerelementen (10, 20) mittels einer Steuereinrichtung (CU) fortlaufend veränderbar ist und abhängig ist von der momentanen Blickrichtung des Sekundärradars, in welche das Abfragesignal ausgesandt werden soll, und
dass die Strahlerelemente derart angeordnet sind, dass in einem ersten Azimutbereich ausschließlich Strahlerelemente einer Gruppe vorhanden sind, und in einem zweiten Azimutbereich ausschließlich Strahlerelemente der anderen Gruppe vorhanden sind, und in den Azimutbereichen zwischen erstem und zweitem Azimutbereich Übergangsbereiche gebildet sind, in denen abwechselnd Strahlerelemente beider Gruppen vorhanden sind.

2. Sekundärradar gemäß Anspruch 1, **dadurch gekennzeichnet, dass** es zum Betrieb in zumindest einem der Abfragemodi Mark X oder Mark XII eingerichtet ist.

3. Sekundärradar gemäß Anspruch 2, **dadurch gekennzeichnet, dass** das Radar im Mode S betrieben werden kann.

4. Sekundärradar gemäß einem der vorangehenden Ansprüche, **dadurch gekennzeichnet, dass** das Abfragesignal und Kontrollsignal gleichzeitig abstrahlbar sind.

5. Sekundärradar gemäß einem der vorangehenden Ansprüche, **dadurch gekennzeichnet, dass** die Anordnung der Strahlerelemente (3) auf der Antenne (1) derart erfolgt, dass beliebige Azimutwinkel im Bereich von 0°-360° abgedeckt werden können.

6. Sekundärradar gemäß einem der vorangehenden Ansprüche, **dadurch gekennzeichnet, dass** die Anordnung der Strahlerelemente (3) kreisförmig ist.

7. Sekundärradar gemäß einem der vorangehenden Ansprüche, **dadurch gekennzeichnet, dass** die von den Strahlerelementen von erster und zweiter Gruppe gebildeten Antennendiagramme im Hinblick auf ihre Azimutabdeckung komplementär zueinander sind.

8. Sekundärradar gemäß einem der vorangehenden Ansprüche, **dadurch gekennzeichnet, dass** die Phased Array-Antenne (1) als eine aktive Phased Array Antenne mit Transmit-Receive Modulen als Strahlerelementen ausgeführt ist.

9. Sekundärradar gemäß einem der vorangehenden Ansprüche, **dadurch gekennzeichnet, dass** die Strahlerelemente der Phased Array Antenne (1) identisch sind.

10. Verfahren zum Betrieb eines Sekundärradars mit Nebenkeulenunterdrückung, wobei
- durch die Überlagerung einer ersten Gruppe von Strahlerelementen (10) eine elektronisch schwenkbare Richtcharakteristik zur Aussendung eines Abfragesignals erzeugt wird, und
- durch die Überlagerung einer zweiten Gruppe von Strahlerelementen (20) ein Kontroll-Signal zur Nebenkeulenunterdrückung erzeugt wird,
**dadurch gekennzeichnet, dass** die Strahlerelemente (3, 11, 21) der ersten und zweiten Gruppe (10, 20) in einer gemeinsamen Phased Array Antenne (1) bereitgestellt werden, und die Zuordnung der einzelnen Strahlerelemente (3, 11, 21) zu der ersten und zweiten Gruppe (10, 20) fortlaufend verändert wird und abhängig von der momentanen Blickrichtung des Sekundärradars ist, in welche das Abfragesignal ausgesandt wird, und
dass die von den Strahlerelementen (11, 21) von erster und zweiter Gruppe (10, 20) abgestrahlten Abfragesignale und Kontrollsignale im Hinblick auf ihre Azimutabdeckung komplementär zueinander sind, wobei, die Strahlerelemente derart angeordnet sind, dass in einem ersten Azimutbereich ausschließlich Strahlerelemente einer Gruppe vorhanden sind, und in einem zweiten Azimutbereich ausschließlich Strahlerelemente der anderen Gruppe vorhanden sind, und in den Azimutbereichen zwischen erstem und zweitem Azimutbereich Übergangsbereiche gebildet sind, in denen abwechselnd Strahlerelemente beider Gruppen vorhanden sind.

11. Verfahren nach Anspruch 10, **dadurch gekennzeichnet, dass** ein Betrieb in zumindest einer der Abfragemodi Mark X oder Mark XII ausgeführt wird.

12. Verfahren gemäß Anspruch 11, **dadurch gekennzeichnet, dass** das Radar im Mode S betrieben wird.

13. Verfahren gemäß einem der vorangehenden Ansprüche 10 bis 12, **dadurch gekennzeichnet, dass** das Abfragesignal und Kontrollsignal gleichzeitig abgestrahlt werden.

## Claims

1. A secondary radar with side lobe suppression for avoiding a spurious target display, comprising
- a first group of radiating elements (10) whose superimposition generates an electronically pivotable directional characteristic for emitting an interrogation signal,
- a second group of radiating elements (20) whose superimposition generates a control signal for side lobe suppression,
**characterized in that** the radiating elements (3, 11, 21) of the first and the second groups are the radiating elements of a joint phased array antenna (1), and the association of the individual radiating elements (3, 11, 21) with the first or second group of radiating elements (10, 20) is continuously changeable by means of a control unit (CU), and is a function of the instantaneous viewing direction of the secondary radar in which the interrogation signal is to be emitted, and
that the radiating elements are arranged in such a way that in a first azimuth range only radiating elements of one group are present, and in a second azimuth range only radiating elements of the other group are present, and in the azimuth ranges between the first and the second azimuth range, transition areas are formed in which radiating elements of both groups are present in alternation.

2. The secondary radar according to Claim 1, **characterized in that** it is configured for operation in at least one of the interrogation modes Mark X or Mark XII.

3. The secondary radar according to Claim 2, **characterized in that** the radar may be operated in mode S.

4. The secondary radar according to one of the preceding claims, **characterized in that** the interrogation signal and the control signal are simultaneously emittable.

5. The secondary radar according to one of the preceding claims, **characterized in that** the radiating elements (3) are arranged on the antenna (1) in such a way that any given azimuth angle in the range from 0° to 360° may be covered.

6. The secondary radar according to one of the preceding claims, **characterized in that** the arrangement of the radiating elements (3) is circular.

7. The secondary radar according to one of the preceding claims, **characterized in that** the antenna diagrams formed by the radiating elements of the first and the second groups are complementary to one another with regard to their azimuth coverage.

8. The secondary radar according to one of the preceding claims, **characterized in that** the phased array antenna (1) is designed as an active phased array antenna having transmit-receive modules as radiating elements.

9. The secondary radar according to one of the preceding claims, **characterized in that** the radiating elements of the phased array antenna (1) are identical.

10. A method for operating a secondary radar with side lobe suppression, wherein
- an electronically pivotable directional characteristic for emitting an interrogation signal is generated by the superimposition of a first group of radiating elements (10), and
- a control signal for side lobe suppression is generated by the superimposition of a second group of radiating elements (20),
**characterized in that** the radiating elements (3, 11, 21) of the first and the second groups (10, 20) are provided in a joint phased array antenna (1), and the association of the individual radiating elements (3, 11, 21) with the first and the second groups is continuously changed, and is a function of the instantaneous viewing direction of the secondary radar in which the interrogation signal is emitted, and
that the interrogation signals and control signals emitted by the radiating elements (11, 21) of the first and the second groups (10, 20) are complementary to one another with regard to their azimuth coverage, wherein the radiating elements are arranged in such a way that in a first azimuth range only radiating elements of one group are present, and in a second azimuth range only radiating elements of the other group are present, and in the azimuth ranges between the first and the second azimuth range, transition areas are formed in which radiating elements of both groups are present in alternation.

11. The method according to Claim 10, **characterized in that** operation thereof is carried out in at least one of the interrogation modes Mark X or Mark XII.

12. The method according to Claim 11, **characterized in that** the radar is operated in mode S.

13. The method according to one of preceding Claims 10 to 12, **characterized in that** the interrogation signal and the control signal are emitted simultaneously.

## Revendications

1. Radar secondaire avec suppression des lobes pour éviter une représentation de cible erronée, comprenant
- un premier groupe d'éléments rayonnants (10) dont la superposition produit une caractéristique directionnelle électroniquement pivotante pour émettre un signal d'interrogation,
- un deuxième groupe d'éléments rayonnants (20) dont la superposition produit un signal de contrôle pour supprimer des lobes,
**caractérisé en ce que** les éléments rayonnants (3, 11, 21) des premier et deuxième groupes sont les éléments rayonnants d'une antenne réseau à commande de phase (1) commune, et l'attribution des éléments rayonnants (3, 11, 21) individuels au premier ou deuxième groupe d'éléments rayonnants (10, 20) est variable en continu au moyen d'un dispositif de commande (CU) et dépend de la direction de visée instantanée du radar secondaire dans laquelle le signal d'interrogation doit être émis, et
**en ce que** les éléments rayonnants sont disposés de telle sorte que dans une première zone azimutale il existe exclusivement des éléments rayonnants d'un groupe et dans une deuxième zone azimutale il existe exclusivement des éléments rayonnants de l'autre groupe, et dans les zones azimutales entre les première et deuxième zones azimutales sont formées des zones de transition dans lesquelles il existe des éléments rayonnants des deux groupes en alternance.

2. Radar secondaire selon la revendication 1, **caractérisé en ce qu'**il est aménagé pour fonctionner dans au moins l'un des modes d'interrogation Mark X ou Mark XII.

3. Radar secondaire selon la revendication 2, **caractérisé en ce que** le radar peut fonctionner en mode S.

4. Radar secondaire selon l'une quelconque des revendications précédentes, **caractérisé en ce que** le signal d'interrogation et le signal de contrôle peuvent être émis en même temps.

5. Radar secondaire selon l'une quelconque des revendications précédentes, **caractérisé en ce que** la disposition des éléments rayonnants (3) sur l'antenne (1) s'effectue de telle sorte que des angles azimutaux libres dans la plage de 0° à 360° peuvent être couverts.

6. Radar secondaire selon l'une quelconque des revendications précédentes, **caractérisé en ce que** la disposition des éléments rayonnants (3) est circulaire.

7. Radar secondaire selon l'une quelconque des revendications précédentes, **caractérisé en ce que** les diagrammes d'antenne formés par les éléments rayonnants des premier et deuxième groupes sont complémentaires les uns aux autres en ce qui concerne leur couverture azimutale.

8. Radar secondaire selon l'une quelconque des revendications précédentes, **caractérisé en ce que** l'antenne réseau à commande de phase (1) est réalisée comme une antenne réseau à commande phase active avec des modules d'émission-réception comme éléments rayonnants.

9. Radar secondaire selon l'une quelconque des revendications précédentes, **caractérisé en ce que** les éléments rayonnants de l'antenne réseau à commande de phase (1) sont identiques.

10. Procédé d'exploitation d'un radar secondaire avec suppression des lobes, dans lequel
- la superposition d'un premier groupe d'éléments rayonnants (10) produit une caractéristique directionnelle électroniquement pivotante pour émettre un signal d'interrogation, et
- la superposition d'un deuxième groupe d'éléments rayonnants (20) produit un signal de contrôle pour la suppression des lobes,
**caractérisé en ce que** les éléments rayonnants (3, 11, 21) des premier et deuxième groupes (10, 20) sont fournis dans une antenne réseau à commande de phase (1) commune et l'attribution des éléments rayonnants (3, 11, 21) individuels aux premier et deuxième groupes (10, 20) varie en continu et dépend de la direction de visée instantanée du radar secondaire dans laquelle est émis le signal d'interrogation, et
**en ce que** les signaux d'interrogation et les signaux de contrôle émis par les éléments rayonnants (11, 21) des premier et deuxième groupes (10, 20) sont complémentaires les uns aux autres en ce qui concerne leur couverture azimutale, dans lequel les éléments rayonnants sont disposés de telle sorte que dans une première zone azimutale il existe exclusivement des éléments rayonnants d'un groupe et dans une deuxième zone azimutale il existe exclusivement des éléments rayonnants de l'autre groupe, et dans les zones azimutales entre les première et deuxième zones azimutales sont formées des zones de transition dans lesquelles il existe des éléments rayonnants des deux groupe en alternance.

11. Procédé selon la revendication 10, **caractérisé en ce qu'**un fonctionnement s'effectue dans au moins l'un des modes d'interrogation Mark X ou Mark XII.

12. Procédé selon la revendication 11, **caractérisé en ce que** le radar fonctionne en mode S.

13. Procédé selon l'une quelconque des revendications 10 à 12, **caractérisé en ce que** le signal d'interrogation et le signal de contrôle sont émis simultanément.
